# EUROPÄISCHE PATENTSCHRIFT

(11) **EP 2 767 615 B1**
(45) Veröffentlichungstag und Bekanntmachung des Hinweises auf die Patenterteilung: **10.04.2019**
(21) Anmeldenummer: 14167838.3
(22) Anmeldetag: 06.12.2006
(51) Int. Cl.: C23C 22/34, C23C 22/44, C23C 22/83, B05D 7/00, B05D 7/14, C09D 5/12, C09D 5/44, C25D 13/20, C23C 22/36

(54) **NASS IN NASS VERFAHREN UND CHROMFREIE SAURE LÖSUNG ZUR KORROSIONSSCHUTZBEHANDLUNG VON STAHLOBERFLÄCHEN**
Wet-on-wet method and chromium free acidic solution for the corrosion protection treatment of metal surfaces
Humide-en-humide procédé et solution acide sans chrome destinés au traitement anticorrosion de surfaces métalliques

(30) Priorität: 09.12.2005 DE 102005059314
(43) Veröffentlichungstag der Anmeldung: 20.08.2014
(62) Teilanmeldung aus: 06829330.7
(73) Patentinhaber: Henkel AG & Co. KGaA, 40589 Düsseldorf (DE)
(72) Erfinder: Frey, Stefan, 64297 Darmstadt (DE); Cornen, Sophie, 40591 Düsseldorf (DE); Czika, Franz-Adolf, 41470 Neuss (DE); Droniou, Patrick, 91700 Colombes (FR); Hohagen, Silvia, 40225 Düsseldorf (DE); Kuhm, Peters, 40724 Hilden (DE); Krömer, Jens, 41470 Neuss (DE)

(56) Entgegenhaltungen:
- EP-A- 1 433 878
- EP-A1- 0 304 108
- EP-A1- 1 405 933
- EP-A1- 1 433 875
- DE-A1- 10 358 310
- DE-A1- 19 933 189
- US-A- 5 897 716

## Beschreibung

Die vorliegende Erfindung betrifft eine saure, chromfreie wässrige Lösung eines Fluoro-Komplexes mindestens eines Elements M ausgewählt aus der Gruppe B, Si, Ti, Zr und Hf mit einem pH-Wert im Bereich von 2 bis 5,5 zur Behandlung von Metalloberflächen, die zusätzlich a) sowohl Zinkionen als auch Magnesiumionen, b) eine oder mehrere Komponenten ausgewählt aus: Zinnionen, Wismutionen, Puffersystemen für den pH-Bereich von 2,5 bis 5,5, und c) Kupferionen und/oder Silberionen enthält, sowie ein Verfahren zur Korrosionsschutzbehandlung von blanken Metalloberflächen, wobei man die Metalloberflächen mit einer derartigen wässrigen Lösung in Kontakt bringt.

Korrosionsschutzmittel, die eine saure wässrige Lösung von Fluoro-Komplexen darstellen, sind seit langem bekannt. Sie werden zunehmend als Ersatz für Chromatierverfahren eingesetzt, die wegen der toxikologischen Eigenschaften von Chromverbindungen zunehmend weniger verwendet werden. In der Regel enthalten derartige Lösungen von Fluoro-Komplexen weitere korrosionsschützende Wirkstoffe, die Korrosionsschutzwirkung und Lackhaftung weiter verbessern.

Beispielsweise beschreibt die DE-A-19 33 013 in einem Ausführungsbeispiel eine Behandlungslösung, die eine wässrige Lösung von Ammoniumhexafluorozirkonat, Natriumnitrat, Cobaltnitrat und Natrium-m-nitrobenzolsulfonat darstellt und einen pH-Wert von 5,2 hat. Die Lösung kann zur Behandlung von Zink-, Stahl- oder Aluminiumoberflächen eingesetzt werden. EP-A-1 571 237 beschreibt eine Behandlungslösung und Behandlungsmethode für Eisen-, Zink-, Aluminium- und Magnesium-haltige Oberflächen. Diese Lösung hat einen pH-Wert im Bereich von 2 bis 6 und enthält 5 bis 5.000 ppm Zirkonium und/oder Titan sowie 0,1 bis 100 ppm freies Fluorid. Zusätzlich kann die Lösung weitere Komponenten ausgewählt aus Chlorat, Bromat, Nitrit, Nitrat, Permanganat, Vanadat, Wasserstoffperoxid, Wolframat, Molybdat oder jeweils die zugehörigen Säuren enthalten. Organische Polymere können ebenfalls anwesend sein. Nach der Behandlung mit einer derartigen Lösung können die Metalloberflächen mit einer weiteren passivierenden Lösung nachgespült werden. EP-A-1 405 933 offenbart eine Zusammensetzung zur Behandlung von Oberflächen von Eisen und/oder Zink, die zumindest ein Metall aus der Gruppe Ti, Zr, Hf und Si sowie eine Fluorionenquelle enthält, wobei bestimmte Bedingungen an die Konzentrationsverhältnisse dieser beiden Komponenten gestellt werden. Zusätzlich kann diese Lösung dieselben weiteren Wirkstoffe wie in EP 1 571 237 enthalten. Als weitere Komponenten können Metallionen ausgewählt aus der Gruppe Ag, Al, Cu, Fe, Mn, Mg, Ni, Co und Zn anwesend sein. DE-A-100 10 758 offenbart eine Behandlungslösung insbesondere für Oberflächen aus Zink, Aluminium und/oder Magnesium, die komplexe Fluoride von Ti, Zr, Hf, Si und/oder B sowie organische Polymere enthält. Zusätzlich kann die Lösung Ionen eines oder mehrerer der Metalle Mn, Ce, Li, V, W, Mo, Mg, Zn, Co und Ni enthalten. Weitere potentielle Zusätze sind Verbindungen, die bei der schichtbildenden Phosphatierung als Phosphatierungsbeschleuniger bekannt sind. WO 95/14539 beschreibt Behandlungslösungen für Metalloberflächen, insbesondere für Aluminium, die komplexe Fluoride von Ti, Zr, Hf, Si, Ge, Sn oder B sowie organische Hydroxycarbonsäuren mit mindestens 2 Hydroxylgruppen (wobei die Hydroxylgruppen der Carbonsäuregruppen nicht gezählt werden) pro Carbonsäuregruppe enthalten. Ein spezielles Beispiel einer derartigen Säure ist Gluconsäure.

In allen diesen Dokumenten wird entweder allgemein in der Beschreibung oder speziell in den Ausführungsbeispielen erwähnt, dass die mit der genannten Lösung behandelten Metalloberflächen getrocknet werden, bevor sie mit einer weiteren organischen Beschichtung wie beispielsweise einem Lack überzogen werden. Speziell bei der Herstellung, Vorbehandlung und Lackierung von Automobilkarosserien ist es jedoch wegen der kurzen Taktzeiten und einer möglichst geringen Länge der Vorbehandlungslinie erwünscht, dass die vorbehandelten Karosserien ohne Zwischentrocknung, d.h. in nassem Zustand in das Tauchlackbad eingefahren werden. Ein Trocknungsschritt, bei dem die Vorbehandlungsschicht beispielsweise durch Entwässern chemisch modifiziert und/oder verfestigt werden kann, ist dabei unerwünscht. Daher muss bei der Vorbehandlung eine korrosionsschützende Schicht erzeugt werden, die ohne eine Trocknung vor Aufbringen einer ersten organischen Lackschicht die erforderliche Wirkung für Korrosionsschutz und Lackhaftung aufweist.

Ein Beschichtungsverfahren, das diesen Anforderungen genügt, ist in EP-A-1 433 876 beschrieben. Die Behandlung von beispielsweise Oberflächen von Stahl, Zink und Aluminium erfolgt hier mit einer Lösung, die Zr, Ti und/oder Hf sowie Fluoridionen und zusätzlich ein wasserlösliches Harz enthält, das als Polyvinyl- oder Polyallylamin angesehen werden kann. In dem einzigen Ausführungsbeispiel, das eine Lackierung der nass gehaltenen vorbehandelten Metalloberfläche beschreibt, wird eine wässrige Lösung von Fluorozirkonsäure, Polyallylamin, Zinknitrat, Kieselsäure und Ascorbinsäure eingesetzt. Hier ist zu erwarten, dass das organische Polymer eine wesentliche Komponente für die Korrosionsschutzwirkung und die Lackhaftung darstellt. Die Anwesenheit organischer Polymere in Vorbehandlungslösungen ist jedoch häufig unerwünscht, da sie zu Schwierigkeiten bei der Abwasserbehandlung führen können.

Eine saure, chromfreie wässrige Lösung eines Fluroro-Komplexes mindestens eines Elements ausgewählt aus der Gruppe B, Si, Zr, Ti und Hf, mit einem pH-Wert im Bereich von 2 bis 5,5 zur Behandlung von blanken Metalloberflächen ist in EP-A- 1 433 878, DE-A-1-199 33 189, EP-A-1- 0304108 und EP-A-1 433 875 beschrieben.

Oberflächen von Zink, Aluminium und verzinktem Stahl lassen sich mit sehr unterschiedlich zusammengesetzten wässrigen Lösungen von Fluoro-Komplexen vorbehandeln, wobei die vorstehend genannten Anforderungen eingehalten werden können. Bei nicht vorbeschichteten Stahloberflächen lassen sich die genannten Anforderungen bisher im Wesentlichen nur mit einer schichtbildenden Zinkphosphatierung erfüllen. Gegenüber dem Standard der schichtbildenden Zinkphosphatierung zeigt eine Vorbehandlung mit wässrigen Lösungen von Fluoro-Komplexen signifikante Nachteile bezüglich Korrosionsschutzwirkung und Lackhaftung, wenn die vorbehandelten Oberflächen vor der Lackierung nicht getrocknet werden.

Dieses Problem lässt sich jedoch lösen, wenn die wässrige Lösung eines Fluoro-Komplexes bestimmte weitere Komponenten enthält. Hierfür betrifft die vorliegende Erfindung gemäß der unabhängigen Ansprüche 1 sowie 10 und 11 und der dort aufgeführten bevorzugten Ausführungsformen eine saure wässrige Lösung, ein entsprechendes Konzentrat und ein Verfahren zur Korrosionsschutzbehandlung von blanken Metalloberflächen.

Unter "blanken" Metalloberflächen werden Metalloberflächen verstanden, die noch keine korrosionsschützende Beschichtung tragen. Bei dem erfindungsgemäßen Verfahren handelt es sich also um den ersten oder einzigen Behandlungsschritt, der eine Korrosionsschutzschicht erzeugt, die wiederum als Basis für eine nachfolgende Lackierung dienen kann. Es handelt sich also nicht um eine Nachbehandlung einer zuvor erzeugten Korrosionsschutzschicht wie beispielsweise einer Phosphatschicht.

Wenn im Rahmen der vorliegenden Erfindung von einer "Säure", speziell von "Carbonsäure" die Rede ist, so ist hierunter die freie Säure und/oder deren Anionen zu verstehen. Dem Fachmann ist bewusst, dass sich unabhängig davon, ob die Säure in freier Form oder in Form von im angegebenen Konzentrationsbereich löslichen Salzen eingesetzt wird, sich ein Gleichgewicht zwischen freier Säure und Salzform einstellt, das von dem pKs-Wert der betreffenden Säure und dem pH-Wert der wässrigen Lösung abhängt. Konzentrationsangaben sind als freie Säure gerechnet. Dasselbe gilt beispielsweise für H₂ZrF₆ oder andere Säuren, die in der wässrigen Lösung vorhanden sind.

Im Rahmen der Untersuchungen zu vorliegender Erfindung wurde deutlich, dass ein Zusatz von einer oder mehreren Komponenten ausgewählt aus Zinnionen, Wismutionen und Puffersystemen für den pH-Bereich von 2,5 bis 5,5 die Korrosionsschutzwirkung von wässrigen Lösungen von Fluoro-Komplexen für Oberflächen aus Stahl, Aluminium, Zink und verzinktem Stahl generell verbessert. Dies gilt unabhängig davon, ob die Oberflächen zwischen dem Kontakt mit dieser Lösung und einer nachfolgenden Lackierung getrocknet werden oder nicht. Derartige Behandlungslösungen sind also nicht nur im Rahmen der vorstehend beschriebenen erfindungsgemäßen Verfahrensfolge vorteilhaft einsetzbar, sondern zeigen eine positive Wirkung für Korrosionsschutz und Lackhaftung von Metalloberflächen allgemein.

Ein Aspekt der vorliegenden Erfindung liegt also zunächst in der Bereitstellung einer sauren, chromfreien wässrigen Lösung mindestens eines Fluoro-Komplexes mindestens eines Elements M ausgewählt aus der Gruppe B, Si, Ti, Zr und Hf mit einem pH-Wert im Bereich von 2 bis 5,5 zur Behandlung von Metalloberflächen, enthaltend zusätzlich eine oder mehrere Komponenten ausgewählt aus: Zinnionen, Wismutionen, Puffersystemen für den pH-Bereich von 2,5 bis 5,5 enthält.

Aus toxikologischen Gründen wird eine wässrige Lösung eingesetzt, die im Wesentlichen frei ist von Chrom(VI)-Verbindungen und die vorzugsweise überhaupt keine Chrom-Verbindungen enthält. Dabei bleiben Spuren von Chrom-Verbindungen unberücksichtigt, die durch Herauslösen aus Edelstahlbehältern in die Behandlungslösung gelangen können. Als "chromfrei" in diesem Sinne werden Behandlungslösungen verstanden, die nicht mehr als 1 ppm, insbesondere nicht mehr als 0,1 ppm Chrom enthalten. Die erfindungsgemäßen Behandlungslösungen stellen keine Phosphatierlösungen dar, d. h. sie führen nicht zur Ausbildung einer amorphen oder kristallinen Phosphatschicht. Dies wird dadurch erreicht, dass die Behandlungslösungen vorzugsweise nicht mehr als 1 g/l anorganische Phosphate oder Phosphorsäure, berechnet als PO₄³⁻, enthalten. Phosphat-Gehalte im Bereich von beispielsweise 10 bis 500 mg/l sind jedoch tolerierbar und können sogar die Wirkung der Behandlungslösung verbessern.

Die saure Behandlungslösung weist einen pH-Wert im Bereich von 2 bis 5,5, insbesondere von 3,5 bis 5 auf. Vorzugsweise wird der pH-Wert auf den genannten sauren Bereich dadurch eingestellt, dass man den Fluoro-Komplex zumindest teilweise in Form einer Säure einsetzt. Er kann jedoch auch durch eine andere Säure, beispielsweise Salpetersäure, eingestellt werden.

Die eine oder mehrere essentiellen oder fakultativen Komponenten liegen vorzugsweise in folgenden Konzentrationsbereichen vor:
Zinnionen: 1 bis 2000 mg/l, vorzugsweise 5 bis 500 mg/l,
Wismutionen: 1 bis 2000, vorzugsweise 5 bis 500 mg/l,
Puffersystem für den pH-Bereich von 2,5 bis 5,5: in einer solchen Menge, dass sich der pH-Wert der Lösung bei einem Eintrag von einem Val Säure oder Lauge pro Liter Lösung um nicht mehr als 0,2 Einheiten verändert,
aromatische Carbonsäuren: 0,1 bis 1000, vorzugsweise 1 bis 500 mg/l,
Nitrationen: 0,1 bis 5000 mg/l, vorzugsweise 1 bis 1000 mg/l,
Kupfer- Cobalt-, Nickel- und/oder Silberionen: jeweils 0,1 bis 300 mg/l, vorzugsweise 1 bis 30 mg/l,
Vanadium- oder Vanadationen: 1 bis 2000, vorzugsweise 5 bis 500 mg/l (als Vanadium berechnet),
Magnesiumionen: 1 bis 2000, vorzugsweise 5 bis 500 mg/l,
Manganionen: 1 bis 2000 mg/l, vorzugsweise 5 bis 500 mg/l,
Zinkionen: 1 bis 2000, vorzugsweise 5 bis 500 mg/l,

Die erfindungsgemäße saure wässrige Lösung enthält zusätzlich zu mindestens einer der vorstehend genannten essentiellen Komponenten (Zinnionen, Wismutionen, Puffersystemen für den pH-Bereich von 2,5 bis 5,5) sowohl Zinkionen als auch Magnesiumionen. Weiterhin ist die Anwesenheit von Kupfer- und/oder Silberionen vorgesehen. Als Puffersystem für den genannten pH-Bereich ist insbesondere ein Essigsäure/Acetat-Puffer geeignet. Ein weiteres geeignetes Puffersystem basiert auf Kaliumhydrogenphthalat.

Vorzugsweise enthält die wässrige Lösung eine solche Menge an Fluoro-Komplex, dass die Konzentration des Metalls M im Bereich von 1 bis 5.000 mg/l, vorzugsweise im Bereich von 5 bis 1.000 mg/l und insbesondere im Bereich von 10 bis 500 mg/l liegt. Als Metall M ist Zirkon und/oder Titan besonders bevorzugt. Weiterhin ist es bevorzugt, dass in dem Fluoro-Komplex das Element M ausgewählt ist aus der Gruppe Si, Ti, Zr und Hf und dass die wässrige Lösung im Mittel mindestens 1, vorzugsweise mindestens 3, insbesondere mindestens 5 Fluorionen pro Ion des Elements M enthält. Dabei ist mit der Formulierung "im Mittel" das rechnerische Atomverhältnis von Fluorionen zu M-Ionen in der wässrigen Lösung gemeint. Wegen der Stabilität von Fluoro-Komplexen der genannten Metalle M ist zu erwarten, dass dann, wenn die wässrige Lösung weniger als 6 Fluorionen pro M-Ion enthält, die Fluorionen nahezu vollständig an die M-Ionen in Form von Fluoro-Komplexen gebunden sind. In diesem Fall sollte also das Fluorid im Wesentlichen vollständig als "komplexes Fluorid" vorliegen.

Die wässrige Lösung kann jedoch auch mehr Fluoridionen enthalten als zur vollständigen Bildung von Hexafluoro-Komplexen erforderlich ist. In diesem Fall kann davon ausgegangen werden, dass im Fluoro-Komplex 6 Fluorionen pro M-Ion vorliegen und dass die überschüssigen Fluoridionen als so genanntes "freies Fluorid" vorliegen. Dies kann beispielsweise in Form von HF und/oder wasserlöslichen Salzen hiervon der Fall sein. Diese Ausführungsform der vorliegenden Erfindung ist dadurch gekennzeichnet, dass im Fluoro-Komplex 6 Fluorionen pro Ion des Metalls M (M ausgewählt aus Si, Ti, Zr, Hf) vorliegen und dass die wässrige Lösung darüber hinaus noch 1 bis 1.000 mg/l Fluoridionen enthält, die nicht an Zirkon gebunden sind.

In einer Ausführungsform der Erfindung enthält die wässrige Behandlungslösung ein Puffersystem für den pH-Bereich von 2,5 bis 5,5, wie vorstehend beschrieben.

Weiterhin kann die wässrige Behandlungslösung zusätzlich Aluminiumionen enthalten. Diese können in Form löslicher Salze, beispielsweise in Form der Nitrate eingebracht werden. In diesem Falle enthält die wässrige Behandlungslösung vorzugsweise 1 bis 1.000 mg/l, insbesondere 10 bis 500 mg/l Aluminiumionen. Aluminiumionen können als "Fänger" für überschüssige freie Fluoridionen dienen, da sie mit diesen stabile Fluorokomplexe bilden. Freie Fluoridionen entstehen in der wässrigen Behandlungslösung dadurch, dass sich das Metall M, beispielsweise Zirkonium, vermutlich in Form von Oxiden, auf den behandelten Metalloberflächen niederschlägt. Die ursprünglich an das Metall M gebundenen Fluoridionen werden hierbei frei. Die durch freie Fluoridionen erhöhte Beizwirkung der wässrigen Lösung kann durch Anwesenheit der Aluminiumionen in Folge der Komplexbildung reduziert werden.

Zusätzlich zu den bereits genannten Komponenten kann die wässrige Behandlungslösung Verbindungen enthalten, die bei der schichtbildenden Phosphatierung als so genannte "Beschleuniger" eingesetzt werden. Diese Beschleuniger haben die Eigenschaft, Wasserstoffatome, die beim Beizangriff der Säure auf die Metalloberfläche entstehen, abzufangen. Diese auch als "Depolarisation" bezeichnete Reaktion erleichtert den Angriff der sauren Behandlungslösung auf die Metalloberfläche und beschleunigt hierdurch die Ausbildung der Korrosionsschutzschicht. Beispielsweise können Beschleuniger eingesetzt werden, die in dem vorstehend genannten Dokument DE-A-199 33 189 aufgeführt sind:
0,05 bis 2 g/l m-Nitrobenzolsulfonationen,
0,1 bis 10 g/l Hydroxylamin in freier oder gebundener Form,
0,05 bis 2 g/l m-Nitrobenzoationen,
0,05 bis 2 g/l p-Nitrophenol,
1 bis 70 mg/l Wasserstoffperoxid in freier oder gebundener Form,
0,05 bis 10 g/l organische N-Oxide
0,01 bis 3 g/l, vorzugsweise bis 0,5 g/l Nitroguanidin
1 bis 500 mg/l Nitritionen
0,5 bis 5 g/l Chlorationen.

Weiterhin kann die Behandlungslösung organische Polymere enthalten, deren positive Wirkung bei einer Korrosionsschutzbehandlung bekannt ist. Beispiele derartiger Polymere sind:
a) Polymere oder Copolymere von ungesättigten Alkoholen oder deren Ester oder Ether,
b) Polymere oder Copolymere von ungesättigten Carbonsäuren, Organophosphonsäuren, Organophosphinsäuren oder jeweils deren Salze, Ester oder Amide,
c) Polyaminosäuren oder Proteine oder jeweils deren Salze, Ester oder Amide,
d) Kohlehydrate oder deren Ester (inklusive Xanthogensäure-Ester) oder Ether,
e) Polyamine, bei denen die Stickstoffatome in die Polymerkette eingebunden sind,
f) Polyether,
g) Polyvinylphenole und deren Substitutionsprodukte,
h) Epoxidharze, Aminoplastharze, Tannine, Phenol-Formaldehydharze,
i) Polymere und Copolymere von Vinylpyrrolidon.

Sofern derartige Polymere anwesend sind, liegt ihre Konzentration in der wässrigen Behandlungslösung vorzugsweise unterhalb von 2000 mg/l. Aus sekundären technischen Gründen wie beispielsweise zur Vereinfachung der Abwasserbehandlung kann es vorteilhaft sein, auf die Anwesenheit von organischen Polymeren in der wässrigen Behandlungslösung weitgehend oder vollständig zu verzichten. Demnach ist eine bevorzugte Ausführungsform der vorliegenden Erfindung dadurch gekennzeichnet, dass die wässrige Lösung nicht mehr als 1 mg/l organisches Polymer enthält. Unter dieser Bedingung ist es weiterhin bevorzugt, dass die wässrige Lösung zusätzlich 10 bis 1.000 mg/l, vorzugsweise 50 bis 500 mg/l Silizium in Form von Kieselsäurepartikel mit einer mittleren Teilchengröße unterhalb von 1 µm enthält. Die genannten Kieselsäure-Partikel mit einer mittleren Teilchengröße unterhalb von 1 µm sind dem hier betroffenen Fachmann unter unterschiedlichen generischen Bezeichnungen bekannt. Beispielsweise werden sie als kolloide Kieselsäure, Fällungskieselsäure oder pyrogene Kieselsäure bezeichnet. Die mittlere Teilchengröße, die vorzugsweise im Bereich von etwa 0,01 µm bis etwa 1 µm liegt, lässt sich durch Lichtbeugungsmethoden oder elektronenmikroskopisch bestimmen.

Die Behandlungslösung kann am Einsatzort durch Auflösen der genannten Komponenten in Wasser und Einstellen des pH-Werts hergestellt werden. Diese Vorgehensweise ist in der Praxis jedoch unüblich. Stattdessen werden in der Praxis üblicherweise wässrige Konzentrate zur Verfügung gestellt, aus denen am Einsatzort durch Verdünnen mit Wasser und erforderlichenfalls Einstellen des pH-Werts die anwendungsfertige wässrige Behandlungslösung hergestellt. Dementsprechend gehört ein wässriges Konzentrat, das beim Verdünnen mit Wasser um einen Faktor von 10 bis 100, insbesondere um einen Faktor im Bereich von etwa 20 bis etwa 50 und erforderlichenfalls Einstellen des pH-Wertes eine saure, chromfreie, wässrige Lösung von Fluoro-Komplexen gemäß vorstehender Beschreibung der Erfindung ergibt.

Die Konzentrate können zur Stabilisierung Polymere mit verdickenden und/oder dispergierenden Eigenschaften enthalten. Beispiele derartiger Polymere sind Polymere oder Copolymere von ungesättigten Carbonsäuren, Kohlehydrate oder Proteine. Diese können in einer Konzentration bis zu 50 g/l anwesend sein.

Aus Stabilitätsgründen sind derartige Konzentrate oft so eingestellt, dass beim Verdünnen mit Wasser der pH-Wert nicht unmittelbar im erforderlichen Bereich liegt. In diesem Fall muss nach dem Verdünnen mit Wasser der pH-Wert entweder nach unten oder nach oben korrigiert werden. Ein Einstellen nach unten erfolgt durch Zugabe einer Säure, wobei sich im vorliegenden Fall entweder die Säureform des Fluoro-Komplexes des Metalls M oder Salpetersäure anbietet. Eine Einstellung des pH-Wertes nach oben kann mit einer beliebigen basischen Substanz erfolgen, beispielsweise mit einer Lösung von Alkalimetallhydroxiden oder - carbonaten, Ammoniak oder organischen Aminen. Zum Erhöhen des pH-Wertes können jedoch auch basisch wirkende Verbindungen oder Salze, wie beispielsweise Oxide, Hydroxide oder Carbonate von Metallen eingesetzt werden, die mögliche Wirkkomponenten in der Behandlungslösung darstellen. Beispielsweise können hier für Oxide, Hydroxide oder Carbonate von Magnesium oder Zink verwendet werden.

Zur vorliegenden Erfindung gehört weiterhin ein Verfahren zur Korrosionsschutzbehandlung von blanken Metalloberflächen, wobei man die Metalloberflächen mit einer vorstehend beschriebenen wässrigen Lösung in Kontakt bringt.

Dabei kann es bevorzugt sein, dass man die Metalloberfläche nach dem Kontakt mit der wässrigen Lösung eines Fluoro-Komplexes mit einer wässrigen Lösung nachspült, die eine oder mehrere Komponenten ausgewählt aus Verbindungen oder Salzen der Elemente Cobalt, Nickel, Zinn, Kupfer, Titan und Zirkon und/oder aus wasserlöslichen oder wasserdispergierbaren organischen Polymeren enthält.

Man bringt die blanke Metalloberfläche für eine Zeit im Bereich von 0,5 bis 10 Minuten, vorzugsweise im Bereich von 1 bis 5 Minuten mit der sauren wässrigen Lösung eines Fluoro-Komplexes in Kontakt. Dies kann beispielsweise durch Eintauchen in die Behandlungslösung oder durch Besprühen mit der Behandlungslösung erfolgen. Die Temperatur der wässrigen Lösung eines Fluoro-Komplexes liegt dabei vorzugsweise im Bereich von 15 bis 60 °C, insbesondere im Bereich von 25 bis 50 °C. Nach diesem Kontakt wird vorzugsweise mit Wasser, insbesondere mit vollentsalztem Wasser nachgespült. Hieran kann sich fakultativ die vorstehend beschriebene Nachspülung anschließen. In diesem Falle wird anschließend nochmals mit Wasser gespült.

Bei der Behandlung mit einer Lösung von Fluoro-Komplexen gemäß der vorliegenden Erfindung können die behandelten Metalloberflächen ohne Trocknung in ein Bad zur kathodischen Elektrotauchlackierung überführt werden. Man kann aber auch die behandelten Metalloberflächen trocknen, bevor man sie mit einem kahodischen Elektrotauchlack oder mit einem anderen Lack wie beispielsweise einem Pulverlack beschichtet.

Die nachfolgende Tabelle 1 zeigt einen allgemeinen Verfahrensablauf, bei dem alle Verfahrensschritte als Tauchverfahren durchgeführt wurden. Abkürzungen: VE-Wasser = vollentsalztes Wasser, RT = Raumtemperatur, Min. = Minuten, KTL = kathodische Elektrotauchlackierung.

**Tabelle 1: Allgemeiner Verfahrensablauf.**

| Prozessschritt | Badzusammensetzung | Badtemperatur | pH-Wert | Behandlungsdauer |
|---|---|---|---|---|
| Reinigung | Alkalischer Reiniger der Anmelderin: 3% Ridoline^{R} 1562 + 0,3% Ridosol^{R} 1561 | 60 °C | Alkalisch | 5 Min. |
| Spüle | Betriebswasser | RT | | 1 Min. |
| Spüle | VE-Wasser | RT | | 1 Min. |
| Vorbehandlung | Gemäß Anspruch 1 (Zirkon wird als H₂ZrF₆ eingesetzt) | 30 °C | 2 bis 5,5 | 3 Min. |
| Spüle | VE-Wasser | RT | | 0,5 Min. |
| Fakultative Trocknung (vergl. Tabellen) | Trockenschrank | 50 °C | | 60 Min. |
| KTL | Elektrotauchlack "Cathoguard^{R}" 310 der Firma BASF | | | |

## Patentansprüche

1. Saure, chromfreie wässrige Lösung eines Fluoro-Komplexes mindestens eines Elements M ausgewählt aus der Gruppe B, Si, Ti, Zr und Hf mit einem pH-Wert im Bereich von 2 bis 5,5 zur Behandlung von Metalloberflächen, **dadurch gekennzeichnet, dass** sie zusätzlich
a) sowohl Zinkionen als auch Magnesiumionen,
b) eine oder mehrere Komponenten ausgewählt aus: Zinnionen, Wismutionen, Puffersystemen für den pH-Bereich von 2,5 bis 5,5,
c) Kupferionen und/oder Silberionen
enthält.

2. Wässrige Lösung nach Anspruch 1, **dadurch gekennzeichnet, dass** sie nicht mehr als 1 mg/l organisches Polymer enthält.

3. Wässrige Lösung nach Anspruch 2, **dadurch gekennzeichnet, dass** sie zusätzlich 10 bis 1000 mg/l, vorzugsweise 50 bis 500 mg/l Silicium in Form von Kieselsäure-Partikel mit einer mittleren Teilchengröße unterhalb von 1 µm enthält.

4. Wässrige Lösung nach einem oder mehreren der Ansprüche 1 bis 3, **dadurch gekennzeichnet, dass** sie eine solche Menge an Fluoro-Komplex enthält, dass die Konzentration des Elements M im Bereich von 1 bis 5000 mg/l, vorzugsweise im Bereich von 5 bis 1000 mg/l und insbesondere im Bereich von 10 bis 500 mg/l liegt.

5. Wässrige Lösung nach einem oder mehreren der Ansprüche 1 bis 4, **dadurch gekennzeichnet, dass** in dem Fluoro-Komplex das Element M ausgewählt ist aus der Gruppe Si, Ti, Zr und Hf und dass die wässrige Lösung im Mittel mindestens 1, vorzugsweise mindestens 3, insbesondere mindestens 5 Fluorionen pro Ion des Elements M enthält.

6. Wässrige Lösung nach Anspruch 5, **dadurch gekennzeichnet, dass** in dem Fluoro-Komplex sechs Fluorionen pro Ion des Elements M vorliegen und dass die wässrige Lösung darüber hinaus noch 1 bis 1000 mg/l Fluoridionen enthält, die nicht an das Element M gebunden sind.

7. Wässrige Lösung nach einem oder mehreren der Ansprüche 1 bis 6, **dadurch gekennzeichnet, dass** sie zusätzlich 10 bis 500 mg/l Nitroguanidin und/oder 0,1 bis 5000 mg/l Nitrationen enthält.

8. Wässrige Lösung nach einem oder mehreren der Ansprüche 1 bis 7, **dadurch gekennzeichnet, dass** sie 0,1 bis 300 mg/l, vorzugsweise 1 bis 30 mg/l Kupfer- und/oder Silberionen enthält.

9. Wässrige Lösung nach einem oder mehreren der Ansprüche 1 bis 8, **dadurch gekennzeichnet, dass** sie ein Puffersystem für den pH-Bereich von 2,5 bis 5,5 enthält.

10. Wässriges Konzentrat, das beim Verdünnen mit Wasser um einen Faktor zwischen 10 und 100 und erforderlichenfalls Einstellen des pH-Wertes eine wässrige Lösung nach einem oder mehreren der Ansprüche 1 bis 9 ergibt.

11. Verfahren zur Korrosionsschutzbehandlung von blanken Metalloberflächen, **dadurch gekennzeichnet, dass** man die Metalloberflächen mit einer wässrigen Lösung nach einem oder mehreren der Ansprüche 1 bis 9 in Kontakt bringt.

12. Verfahren nach Anspruch 11 **dadurch gekennzeichnet, dass** man die Metalloberflächen nach dem Kontakt mit der wässrigen Lösung eines Fluoro-Komplexes mit einer wässrigen Lösung nachspült, die eine oder mehrere Komponenten ausgewählt aus Verbindungen oder Salzen der Elemente Cobalt, Nickel, Zinn, Kupfer, Titan und Zirkon und/oder aus wasserlöslichen oder wasserdispergierbaren organischen Polymeren enthält.

13. Verfahren nach einem oder beiden der Ansprüche 11 und 12 **dadurch gekennzeichnet, dass** man die Metalloberflächen in einem nachfolgenden Schritt mit einem kathodisch abscheidbaren Elektrotauchlack beschichtet, wobei die Metalloberflächen nach dem Kontakt mit der wässrigen Lösung eines Fluoro-Komplexes und vor dem Beschichten mit dem kathodisch abscheidbaren Elektrotauchlack nicht getrocknet werden.

## Claims

1. An acidic, chromium-free, aqueous solution of a fluoro complex of at least one element M selected from the group of B, Si, Ti, Zr and Hf, having a pH in the range from 2 to 5.5, for treating metal surfaces, **characterized in that** said solution additionally contains
a) both zinc ions and magnesium ions,
b) one or more components selected from: tin ions, bismuth ions, buffer systems for the pH range from 2.5 to 5.5,
c) copper ions and/or silver ions.

2. The aqueous solution according to claim 1, **characterized in that** it contains no more than 1 mg/l of an organic polymer.

3. The aqueous solution according to claim 2, **characterized in that** it additionally contains 10 to 1000 mg/l, preferably 50 to 500 mg/l, of silicon in the form of silicic acid particles having an average particle size below 1 µm.

4. The aqueous solution according to one or more of claims 1 to 3, **characterized in that** it contains a quantity of the fluoro complex such that the concentration of element M is in the range from 1 to 5000 mg/l, preferably in the range from 5 to 1000 mg/l, and in particular in the range from 10 to 500 mg/l.

5. The aqueous solution according to one or more of claims 1 to 4, **characterized in that**, in the fluoro complex, element M is selected from the group of Si, Ti, Zr and Hf and **in that** the aqueous solution in the agent contains at least 1, preferably at least 3, in particular at least 5, fluorine ions per ion of element M.

6. The aqueous solution according to claim 5, **characterized in that**, in the fluoro complex, there are six fluorine ions per ion of element M, and **in that** the aqueous solution also contains 1 to 1000 mg/l of fluoride ions that are not bound to element M.

7. The aqueous solution according to one or more of claims 1 to 6, **characterized in that** it additionally contains 10 to 500 mg/l of nitroguanidine and/or 0.1 to 5000 mg/l of nitrate ions.

8. The aqueous solution according to one or more of claims 1 to 7, **characterized in that** it contains 0.1 to 300 mg/l, preferably 1 to 30 mg/l, of copper ions and/or silver ions.

9. The aqueous solution according to one or more of claims 1 to 8, **characterized in that** it contains a buffer system for the pH range of 2.5 to 5.5.

10. An aqueous concentrate which, upon dilution with water by a factor between 10 and 100 and, if necessary, adjustment of the pH, yields an aqueous solution according to one or more of claims 1 to 9.

11. A method for corrosion-protective treatment of bare metal surfaces, **characterized in that** the metal surfaces are brought into contact with an aqueous solution according to one or more of claims 1 to 9.

12. The method according to claim 11, **characterized in that**, after being brought into contact with the aqueous solution of a fluoro complex, the metal surfaces are rinsed with an aqueous solution which contains one or more component(s) selected from compounds or salts of the elements cobalt, nickel, tin, copper, titanium and zirconium and/or from water-soluble or water-dispersible organic polymers.

13. The method according to one or both of claims 11 and 12, **characterized in that**, in a subsequent step, the metal surfaces are coated with a cathodically depositable electrocoating paint, the metal surfaces not being dried after contact with the aqueous solution of a fluoro complex and before coating with the cathodically depositable electrocoating paint.

## Revendications

1. Solution aqueuse acide sans chrome d'un complexe fluoré d'au moins un élément M choisi dans le groupe comprenant B, Si, Ti, Zr et Hf avec une valeur de pH dans la plage de 2 à 5,5 pour le traitement de surfaces métalliques, **caractérisée en ce qu'**elle contient également
a) des ions zinc ainsi que des ions magnésium,
b) un ou plusieurs composants choisis parmi : les ions étain, les ions bismuth, les systèmes tampons pour un pH dans la plage de 2,5 à 5,5,
c) des ions cuivre et/ou des ions argent.

2. Solution aqueuse selon la revendication 1, **caractérisée en ce qu'**elle ne contient pas plus de 1 mg/l de polymère organique.

3. Solution aqueuse selon la revendication 2, **caractérisée en ce qu'**elle contient en outre de 10 à 1 000 mg/l, de préférence de 50 à 500 mg/l de silicium sous forme de particules d'acide silique ayant une taille moyenne inférieure à 1 µm.

4. Solution aqueuse selon l'une ou plusieurs des revendications 1 à 3, **caractérisée en ce qu'**elle contient une quantité de complexe fluoré telle que la concentration de l'élément M est dans la plage de 1 à 5 000 mg/l, de préférence dans la plage de 5 à 1 000 mg/l et en particulier dans la plage de 10 à 500 mg/l.

5. Solution aqueuse selon l'une ou plusieurs des revendications 1 à 4, **caractérisée en ce que**, dans le complexe fluoré, l'élément M est choisi dans le groupe comprenant Si, Ti, Zr et Hf, et **en ce que** la solution aqueuse contient en moyenne au moins 1, de préférence au moins 3, en particulier au moins 5, ions fluor par ion de l'élément M.

6. Solution aqueuse selon la revendication 5, **caractérisée en ce que** six ions fluor par ion de l'élément M sont présents dans le complexe fluoré, et **en ce que** la solution aqueuse contient par ailleurs de 1 à 1 000 mg/l d'ions fluor qui ne sont pas liés à l'élément M.

7. Solution aqueuse selon l'une ou plusieurs des revendications 1 à 6, **caractérisée en ce qu'**elle contient en outre de 10 à 500 mg/l de nitroguanidine et/ou de 0,1 à 5 000 mg/l d'ions nitrate.

8. Solution aqueuse selon l'une ou plusieurs des revendications 1 à 7, **caractérisée en ce qu'**elle contient de 0,1 à 300 mg/l, de préférence de 1 à 30 mg/l, d'ions cuivre et/ou argent.

9. Solution aqueuse selon l'une ou plusieurs des revendications 1 à 8, **caractérisée en ce qu'**elle contient un système tampon pour un pH dans la plage de 2,5 à 5,5.

10. Concentré aqueux qui donne, lors d'une dilution avec de l'eau avec un facteur compris entre 10 et 100 et, si nécessaire, lors d'un ajustement du pH, une solution aqueuse selon l'une ou plusieurs des revendications 1 à 9.

11. Procédé de traitement de protection contre la corrosion de surfaces métalliques brillantes, **caractérisé en ce qu'**on met les surfaces métalliques en contact avec une solution aqueuse selon l'une ou plusieurs des revendications 1 à 9.

12. Procédé selon la revendication 11, **caractérisé en ce que**, après le contact avec la solution aqueuse d'un complexe fluoré, on rince les surfaces métalliques avec une solution aqueuse qui contient un ou plusieurs composants choisis parmi les composés ou les sels des éléments cobalt, nickel, étain, cuivre, titane et zirconium et/ou des polymères organiques solubles dans l'eau ou pouvant être dispersés dans l'eau.

13. Procédé selon l'une des revendications 11 et 12 ou les deux, **caractérisé en ce qu'**on revêt, dans une étape ultérieure, les surfaces métalliques d'une peinture électrophorétique pouvant être déposée par voie cathodique, les surfaces métalliques n'étant pas séchées après le contact avec la solution aqueuse d'un complexe fluoré et avant le revêtement avec la peinture électrophorétique pouvant être déposée par voie cathodique.
